# EUROPEAN PATENT SPECIFICATION

(11) **EP 3 431 865 B1**
(45) Date of publication and mention of the grant of the patent: **07.09.2022**
(21) Application number: 17382486.3
(22) Date of filing: 21.07.2017
(51) Int. Cl.: F21S 41/19, F21S 41/657, F21S 45/00, B60Q 1/06

(54) **LIGHTING DEVICE FOR A VEHICLE**
BELEUCHTUNGSVORRICHTUNG FÜR EIN FAHRZEUG
DISPOSITIF D'ÉCLAIRAGE POUR VÉHICULE

(43) Date of publication of application: 23.01.2019
(73) Proprietor: Gureak Lanean S.A., 20018 San Sebastian, Guipuzcoa (ES)
(72) Inventor: PÉREZ LARRAZABAL, Josetxu, 20009 Donostia- San Sebastian (Guipuzkoa) (ES); SIERRA, Maite, 20009 Donostia- San Sebastian (Guipuzkoa) (ES); GOENAGA, Igor, 20009 Donostia- San Sebastian (Guipuzkoa) (ES); BELOKI, Oihane, 20009 Donostia- San Sebastian (Guipuzkoa) (ES); ESTEVEZ, Alex, 20009 Donostia- San Sebastian (Guipuzkoa) (ES); DOMINGUEZ, Alberto, 20009 Donostia- San Sebastian (Guipuzkoa) (ES); CORREAL, Guillermo, 20009 Donostia- San Sebastian (Guipuzkoa) (ES); PALENZUELA, Luis, 20009 Donostia- San Sebastian (Guipuzkoa) (ES); ARREGI, Bernaitz, 20009 Donostia- San Sebastian (Guipuzkoa) (ES); IRAZUSTA, Aitor, 20009 Donostia- San Sebastian (Guipuzkoa) (ES); SÁNCHEZ IDIGORAS, Ion, 20018 SAN SEBASTIÁN (GUIPÚZCOA) (ES)
(74) Representative: Balder IP Law, S.L.

(56) References cited:
- EP-A1- 0 654 375
- EP-A2- 1 560 303
- WO-A1-2014/009185
- DE-A1-102011 081 062
- DE-A1-102015 119 524
- JP-A- 2009 021 135
- JP-A- 2010 179 920
- JP-A- 2013 080 598
- US-A1- 2005 180 157
- US-A1- 2007 177 401
- US-A1- 2015 124 467

## Description

### TECHNICAL FIELD

This invention belongs to the field of lighting devices for vehicles, and more particularly, to those providing a rotation functionality for at least part of these lighting device.

### STATE OF THE ART

Vehicles lighting devices usually comprise a housing where lighting modules are housed in. These lighting modules, which provides the vehicle with varied lighting functions, need power supply, provided by a main connector located in the housing. This main connector is usually a universal connector, so that vehicle manufacturers may design their connections regardless the lighting manufacturers.

However, providing a way from this connector to the lighting module itself usually involves the use of a great amount of electric cables, which may become entangled and trapped due to the increasingly high number of electrical connections which are needed in current lighting devices.

Further, the assembly of a lighting device is usually carried out with hardly any visibility and accessibility, since lighting devices are becoming narrower and shallower, and traditional light sources are being replaced by semiconductor ones, such as laser light sources or light emitting diodes (LEDs).

Such lighting devices are known from US2005180157A and EP0654375A.

A manufacturing method should be provided taking into account the needs of current lighting modules, which usually include the freedom to rotate or pivot at the user's request, for providing some specific lighting functions, such as cornering lights.

### DESCRIPTION OF THE INVENTION

The invention provides a solution for this problem by means of lighting device for a vehicle according to claim 1 and a vehicle according to claim 8. Preferred embodiments of the invention are defined in dependent claims.

In an inventive aspect, the invention provides a lighting device for a vehicle, the lighting device comprising
a housing, comprising movable ball joints, a main connector and a first support with a hole;
a second support, arranged in such a way that at least part of the second support is able to move, pivot and/or rotate with respect to the first support;
a lighting module suitable for providing a lighting function;
wherein the second support comprises a first secondary connector being in electrical connection with the main connector, this electrical connection passing through the hole of the first support;
wherein the second support additionally comprises a positioner;
wherein the lighting module comprises a second secondary connector suitable for being electrically coupled with the first secondary connector and also comprises a complementary positioner suitable for being mechanically coupled to the positioner; and
wherein the lighting module comprises pivoting connections suitable for being coupled to the ball joints of the housing.

This lighting device ensures that the electric connection of the lighting module to the main connector is made reducing both the number of assembly operations and the presence of uncontrolled portions of cables and wires present in the zone of the housing where the lighting module is plugged, but at the same time allows the rotation of a lighting module connected to the second support.

In some particular embodiments, the first support is a portion of the housing. In different embodiments, this first support is an additional element, which is fixed to the housing.

In some particular embodiments, the second support comprises a first portion fixed to the first support and a second portion attached to the first support and able to move, pivot and/or rotate with respect to the first portion. This second portion is the portion of the second support which comprises the first secondary connector and the positioner.

This arrangement of the second support in two portions allows the optimization of the elements of this lighting device: a first support may be manufactured and fixed to the housing, while a second support in two pieces may be attached to the first support, this second support being adapted to the particular movement requirements of the lighting module.

In some particular embodiments, the positioner comprises at least two pins and complementary positioner comprises at least two holes. In other particular embodiments, the positioner comprises at least two holes and the complementary positioner comprises at least two pins. These embodiments present a complementary shape for the positioner and complementary positioner, which allows the lighting module to be guided and mechanically attached to the housing, but in such a way that its movement, rotation and/or pivoting with respect to this housing is allowed.

In some particular embodiments, the second secondary connector and the complementary positioner are arranged in a third support fixed to the lighting module.

These embodiments, where the second secondary connector and the complementary positioner are transferred to an external third support allow the use of standard lighting modules, without the need of altering the manufacturing process of these lighting modules, which are usually produced by different manufacturers. Any lighting device may be adapted to work in this system, due to the use of the third support.

In some particular embodiments, the first support comprises a first guiding element and the second support comprises a second guiding element adapted to cooperate with the first guiding element. In more particular embodiments, the first guiding element is a pin and the second guiding element is a slot.

These guiding elements control the displacement of the second support with respect to the first support, so that it is easily reversible.

In a further inventive aspect, the invention provides a vehicle comprising a lighting device according to the previous inventive aspect.

Such a vehicle may benefit from the abovementioned advantages: the need of extra portions of conductive tracks being uncontrolledly located within the housing is reduced. This improves the assembly tasks of these lighting devices, and therefore, of the vehicles where these lighting devices are installed in.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The scope of the invention is limited only by the appended claims.

The drawings comprise the following figures:
Figure 1 shows a perspective view of some elements of a lighting device according to the invention.
Figure 2 shows a side sectional view of more elements of a lighting device according to the invention.
Figure 3 shows even further elements of a lighting device according to the invention.
Figure 4 shows a side sectional view of a lighting device according to the invention in a different position.
Figure 5 shows a vehicle comprising a lighting device according to the invention.

### DETAILED DESCRIPTION OF THE INVENTION

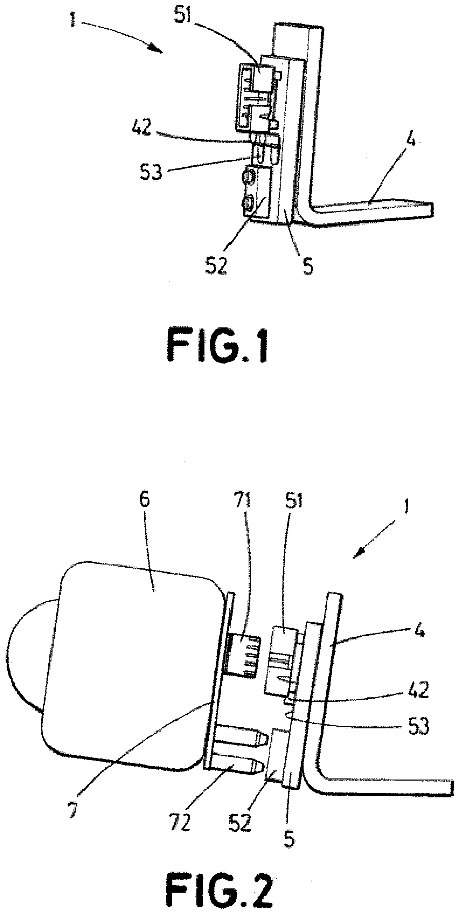

Figure 1 shows a perspective view of some elements of a lighting device 1 according to the invention:
a first support 4, which is intended to be fixed to the housing of the lighting device; and
a second support 5, laid on the first support 4, in such a way that this second support 5 is able to move, pivot and/or rotate with respect to the first support 4.

All of these elements are intended to be included inside the housing, which contains a main connector that supplies electric power to the whole lighting device.

The second support 5 comprises a first secondary connector 51 in which is intended to provide electrical connection with the main connector. This first secondary connector 51 is therefore able to rotate or pivot with respect to the first support 4, keeping the electrical supply for any electronic part connected to it. This feature is key for current lighting modules, which precise this ability of moving and pivoting or rotating with respect to the housing.

The second support 5 additionally comprises a positioner 52, suitable for providing spatial positioning to any element which comprises a corresponding complementary positioner.

A first guiding element 42 in the shape of a pin is observed in the first support 4, and a second guiding element 53 in the shape of a slot is observed in the second support 5. These two guiding elements will cooperate in the displacement of the second support 5 with respect to the first support 4.

Figure 2 shows a side sectional view of more elements of this lighting device 1.

The lighting device 1 further comprises a lighting module 6, suitable for providing a lighting function, and a third support 7, solidly attached to the lighting module 6. In some embodiments, such as the one shown in this figure, the lighting module 6 is attached to the third support 7, but in other embodiments, it is the lighting module 6 itself that comprises the elements of the third support 7, so that the lighting module 6 may be directly coupled to the second support 5. An advantage of separating these two parts is that the third support 7 may be manufactured with the first and second supports, and may be coupled to a wide variety of standard light modules 6.

In this embodiment, this third support 7 comprises a second secondary connector 71 and a complementary positioner 72. The second secondary connector 71 is suitable for coupling to the first secondary connector 51. On the other hand, the complementary positioner 72 is suitable for mechanical coupling with the positioner 52 of the second support 5. When the second secondary connector 71 is coupled to the first secondary connector 51 and the complementary positioner 72 is coupled to the positioner 52, the lighting module 6 may receive electric power and is able to rotate or pivot with respect to the first support 4, and hence to the housing, as will be shown below.

In the cases where the lighting module 6 comprises by itself the elements of the third support 7, it is the lighting module 6 which is positioned by the positioner 52. In this figure, the third support 7 is a separate part which is attached to the lighting module 6, but in other embodiments, it is the lighting module 6 which is directly attached to the second support 5 by means of the positioner 52.

In the embodiment shown in this figure, the positioner 52 includes two holes and the complementary positioner 72 comprises two pins. However, this arrangement may vary in different embodiments, since there are many ways in which the skilled person would obtain a positioning between two elements. One option is placing the holes in the complementary positioner 72 and the pins in the positioner 52.

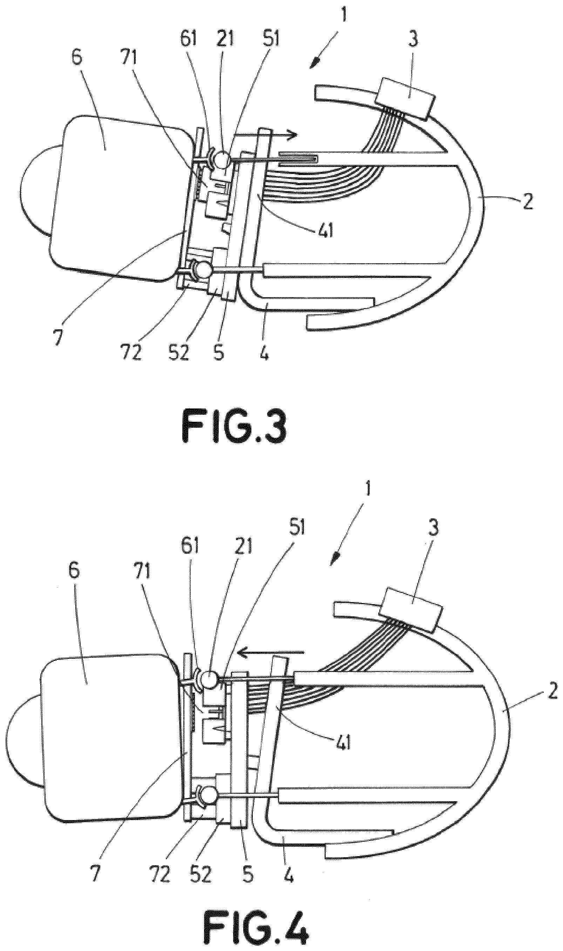

Figure 3 shows even further elements of the lighting device 1.

The lighting module 6 further comprises pivoting connections 61. These pivoting connections 61 are suitable for coupling the lighting module 6 to the ball joints 21 of the housing 2, the movement of which causes the lighting module 6 to pivot or rotate with respect to the housing 2. The electrical connections connecting the main connector 3 to the first secondary connector 51 pass through a hole 41 located in the first support 4.

Figure 4 shows a side sectional view of a lighting device according to the invention in a different position, once the upper ball joint has been moved. As the pivoting connections 61 are a solid part with the rest of the lighting module 6, the lighting module 6 rotates when one of the ball joints 21 has a relative movement with respect to other one. The electrical connections connecting the main connector 3 to the first secondary connector 51 pass through a hole 41 located in the first support 4.

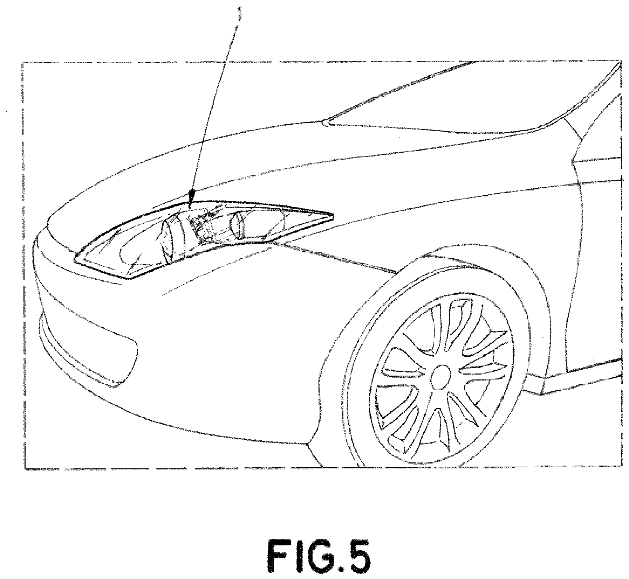

Figure 5 shows a vehicle comprising a lighting device according to the invention. Such a lighting device 1 provides the same functionalities as current lighting devices, but has a far easier and safer assembly and disassembly process.

## Claims

1. Lighting device (1) for a vehicle, the lighting device (1) comprising
a housing (2), comprising movable ball joints (21), a main connector (3) and a first support (4) with a hole (41);
a second support (5), arranged in such a way that at least part of the second support (5) is able to move, pivot and/or rotate with respect to the first support (4);
a lighting module (6) suitable for providing a lighting function;
wherein the second support (5) comprises a first secondary connector (51) being in electrical connection with the main connector (3), this electrical connection passing through the hole (41) of the first support (4);
wherein the second support (5) additionally comprises a positioner (52);
wherein the lighting module (6) comprises a second secondary connector (71) suitable for being electrically coupled with the first secondary connector (51) and also comprises a complementary positioner (72) suitable for being mechanically coupled to the positioner (52); and
wherein the lighting module (6) comprises pivoting connections (61) suitable for being coupled to the ball joints (21) of the housing (2).

2. Lighting device (1) according to claim 1, wherein the second support (5) comprises
a first portion fixed to the first support (4); and
a second portion attached to the first support and able to move, pivot and/or rotate with respect to the first portion; the second portion comprising the first secondary connector (51) and the positioner (52).

3. Lighting device (1) according to any of the preceding claims, wherein the first support (4) is a portion of the housing (2).

4. Lighting device (1) according to any of claims 1 or 2, wherein the first support (4) is an additional element different from the housing (2) and fixed to the housing (2).

5. Lighting device (1) according to any of the preceding claims, wherein the positioner (52) includes at least two pins.

6. Lighting device according to claim 5, wherein the complementary positioner (72) comprises at least two holes.

7. Lighting device (1) according to any of claims 1 to 4, wherein the positioner (52) includes at least two holes.

8. Lighting device according to claim 7, wherein the complementary positioner (72) comprises at least two pins.

9. Lighting device (1) according to any of the preceding claims, wherein the second secondary connector (71) and the complementary positioner (72) are arranged in a third support (7) fixed to the lighting module (6).

10. Lighting device (1) according to any of the preceding claims, wherein the first support (4) comprises a first guiding element (42) and the second support comprises a second guiding element (53) adapted to cooperate with the first guiding element (42).

11. Lighting device (1) according to claim 10, wherein the first guiding element (42) is a pin and the second guiding element (53) is a slot.

12. Vehicle (100) comprising a lighting device (1) according to any of the preceding claims.

## Patentansprüche

1. Beleuchtungsvorrichtung (1) für ein Fahrzeug, wobei die Beleuchtungsvorrichtung (1) ein Gehäuse (2) umfasst, das bewegliche Kugelgelenke (21), einen Hauptstecker (3) und eine erste Halterung (4) mit einem Loch (41) umfasst; eine zweite Halterung (5), die so angeordnet ist, dass zumindest ein Teil der zweiten Halterung (5) in Bezug auf die erste Halterung (4) beweglich, schwenkbar und/oder drehbar ist; ein Beleuchtungsmodul (6), das geeignet ist, eine Beleuchtungsfunktion bereitzustellen; wobei die zweite Halterung (5) einen ersten sekundären Stecker (51) umfasst, der in elektrischer Verbindung mit dem Hauptstecker (3) steht, wobei diese elektrische Verbindung durch das Loch (41) der ersten Halterung (4) verläuft; wobei die zweite Halterung (5) zusätzlich einen Positionierer (52) aufweist; wobei das Beleuchtungsmodul (6) einen zweiten sekundären Stecker (71) aufweist, der geeignet ist, mit dem ersten sekundären Stecker (51) elektrisch gekoppelt zu werden, und auch einen komplementären Positionierer (72) aufweist, der geeignet ist, mit dem Positionierer (52) mechanisch gekoppelt zu werden; und wobei das Beleuchtungsmodul (6) Schwenkverbindungen (61) aufweist, die geeignet sind, mit den Kugelgelenken (21) des Gehäuses (2) gekoppelt zu werden.

2. Beleuchtungsvorrichtung (1) nach Anspruch 1, wobei die zweite Halterung (5) einen ersten Abschnitt umfasst, der an der ersten Halterung (4) befestigt ist, und einen zweiten Abschnitt, der an der ersten Halterung angebracht ist und sich in Bezug auf den ersten Abschnitt bewegen, schwenken und/oder drehen kann, wobei der zweite Abschnitt den ersten sekundären Stecker (51) und den Positionierer (52) umfasst.

3. Beleuchtungsvorrichtung (1) nach einem der vorhergehenden Ansprüche, wobei die erste Halterung (4) ein Teil des Gehäuses (2) ist.

4. Beleuchtungsvorrichtung (1) nach einem der Ansprüche 1 oder 2, wobei die erste Halterung (4) ein zusätzliches, vom Gehäuse (2) verschiedenes Element ist, das am Gehäuse (2) befestigt ist.

5. Beleuchtungsvorrichtung (1) nach einem der vorhergehenden Ansprüche, wobei der Positionierer (52) mindestens zwei Stifte aufweist.

6. Beleuchtungsvorrichtung (1) nach einem der vorhergehenden Ansprüche, wobei der Positionierer (52) mindestens zwei Stifte aufweist.

7. Beleuchtungsvorrichtung (1) nach einem der Ansprüche 1 bis 4, wobei der Positionierer (52) mindestens zwei Löcher aufweist.

8. Beleuchtungsvorrichtung nach Anspruch 7, wobei der komplementäre Positionierer (72) mindestens zwei Stifte aufweist.

9. Beleuchtungsvorrichtung (1) nach einem der vorhergehenden Ansprüche, wobei der zweite sekundäre Stecker (71) und der komplementäre Positionierer (72) in einer dritten Halterung (7) angeordnet sind, die am Beleuchtungsmodul (6) befestigt ist.

10. Beleuchtungsvorrichtung (1) nach einem der vorhergehenden Ansprüche, wobei die erste Halterung (4) ein erstes Führungselement (42) und die zweite Halterung ein zweites Führungselement (53) aufweist, das mit dem ersten Führungselement (42) zusammenwirken kann.

11. Beleuchtungsvorrichtung (1) nach Anspruch 10, wobei das erste Führungselement (42) ein Stift und das zweite Führungselement (53) ein Schlitz ist.

12. Fahrzeug (100) mit einer Beleuchtungseinrichtung (1) nach einem der vorhergehenden Ansprüche.

## Revendications

1. Dispositif d'éclairage (1) destiné à un véhicule, le dispositif d'éclairage (1) comprenant
un boîtier (2), comprenant des joints sphériques mobiles (21), un connecteur principal (3) et un premier support (4) ave un orifice (41) ;
un second support (5), prévu de sorte qu'au moins une partie du second support (5) puisse se déplacer, pivoter et/ou tourner par rapport au premier support (4) ;
un module d'éclairage (6) adapté pour offrir une fonction d'éclairage ;
dans lequel le second support (5) comprend un premier connecteur secondaire (51) qui est en liaison électrique avec le connecteur principal (3), cette liaison électrique passant par l'orifice (41) du premier support (4) ;
dans lequel le second support (5) comprend en outre un positionneur (52) ;
dans lequel le module d'éclairage (6) comprend un second connecteur secondaire (71) adapté pour être couplé électriquement au premier connecteur secondaire (51), et comprend en outre un positionneur complémentaire (72) adapté pour être couplé mécaniquement au positionneur (52) ;
et
dans lequel le module d'éclairage (6) comprend des liaisons pivotantes (61) adaptées pour être couplées aux joints sphériques (21) du boîtier (2).

2. Dispositif d'éclairage (1) selon la revendication 1, dans lequel le second support (5) comprend
une première partie fixée sur le premier support (4) ; et
une seconde partie fixée sur le premier support et capable de se déplacer, de pivoter et/ou de tourner par rapport à la première partie ; la seconde partie comprenant le premier connecteur secondaire (51) et le positionneur (52).

3. Dispositif d'éclairage (1) selon l'une quelconque des revendications précédentes, dans lequel le premier support (4) est une partie du boîtier (2).

4. Dispositif d'éclairage (1) selon l'une quelconque des revendications 1 ou 2, dans lequel le premier support (4) est un élément supplémentaire différent du boîtier (2) et fixé sur le boîtier (2).

5. Dispositif d'éclairage (1) selon l'une quelconque des revendications précédentes, dans lequel le positionneur (52) comprend au moins deux broches.

6. Dispositif d'éclairage selon la revendication 5, dans lequel le positionneur complémentaire (72) comprend au moins deux orifices.

7. Dispositif d'éclairage (1) selon l'une quelconque des revendications 1 à 4, dans lequel le positionneur (52) comprend au moins deux orifices.

8. Dispositif d'éclairage selon la revendication 7, dans lequel le positionneur complémentaire (72) comprend au moins deux broches.

9. Dispositif d'éclairage (1) selon l'une quelconque des revendications précédentes, dans lequel le second connecteur secondaire (71) et le positionneur complémentaire (72) sont disposés dans un troisième support (7) fixé sur le module d'éclairage (6).

10. Dispositif d'éclairage (1) selon l'une quelconque des revendications précédentes, dans lequel le premier support (4) comprend un premier élément de guidage (42) et le second support comprend un second élément de guidage (53) adapté pour coopérer avec le premier élément de guidage (42).

11. Dispositif d'éclairage (1) selon la revendication 10, dans lequel le premier élément de guidage (42) est une broche et le second élément de guidage (53) est une fente.

12. Véhicule (100) comprenant un dispositif d'éclairage (1) selon l'une quelconque des revendications précédentes.
